# EUROPEAN PATENT SPECIFICATION

(11) **EP 1 204 319 B1**
(45) Date of publication and mention of the grant of the patent: **24.09.2003**
(21) Application number: 00946194.8
(22) Date of filing: 21.07.2000
(51) Int. Cl.: A01N 31/06

(54) **ANTISEPTIC COMPOSITION**
ANTISEPTISCHE ZUSAMMENSETZUNGEN
COMPOSITION ANTISEPTIQUE

(30) Priority: 21.07.1999 GB 9917040
(43) Date of publication of application: 15.05.2002
(73) Proprietor: Clarke, Paul Douglas, London W1N 1DA (GB)
(72) Inventor: Clarke, Paul Douglas, London W1N 1DA (GB)
(74) Representative: Wain, Christopher Paul
(86) International application number: GB0002825
(87) International publication number: WO01005226

(56) References cited:
- GB-A- 2 282 534
- NISHIMURA, HIROYUKI ET AL: "Microbial transformation of monoterpenes: flavor and biological activity" ACS SYMP. SER. (1996), 637(BIOTECHNOLOGY FOR IMPROVED FOODS AND FLAVORS), , pages 173-187, XP002148480

## Description

The present invention relates to an antiseptic composition.

It is known that a number of natural products have insect repellent properties. Citriadora oil obtained from various species of eucalyptus is one example of such a natural product, citronella oil which is obtained from certain grasses is another. We have previously investigated certain insect repellent natural products and have found that the insect repellent properties are in a fraction rich in p-menthane-3,8-diol (PMD). This is described in our GB-A-2282534. In GB-A-1315625, there is described the use of certain p-menthane diols, but not PMD, to provide a physiological cooling effect.

We have now found, very surprisingly, that PMD not only has the insect repellent properties we have previously described, but also possesses the totally unrelated quality of antiseptic properties. Thus, we have observed antiseptic activity of the compound against certain microbes and, in particular and most importantly, against two strains of multiply resistant *Staphylococcus aureus* (MRSA). It appears, therefore, that PMD will have general antiseptic utility and be particularly useful, at least in respect of certain microbes, as a bactericide as well as being fungicidal and capable of acting as an antibiotic.

According to one aspect of the invention, we provide the use of PMD as an antiseptic. According to a further aspect of the invention, there is provided the use of PMD as an antibiotic. According to a further aspect, the invention provides the use of PMD as a fungicide and/or bactericide

The PMD for use in the present invention may be derived from a natural source or may be synthetic, or a mixture of the two. A preferred source of natural PMD is the lemon eucalyptus plant. Synthetic PMD may be obtained by any route, for example, such as described by Zimmerman and English in J.A.C.S. 75 (1953) pp 2367-2370.

The PMD for use in the present invention may be a substantially pure form of the compound, or a crude extract, for example from a natural source. An example of a crude extract is a PAID-rich extract derived from lemon eucalyptus. The PMD can be produced by cyclisation of citronellal which is present in high concentration in lemon eucalyptus oil (approximately 75% by weight). We have obtained a PMD-rich extract from the lemon eucalyptus oil which includes both geometric isomers of PMD usually at about 64% by weight. The crude extract also includes citronellol and isopulegols plus certain other minor components.

According to a further aspect of the invention, there is provided the use of a PMD-rich extract containing composition, which extract is derived from natural lemon eucalyptus oil, as an antiseptic. We market this crude extract under the trade mark "Citriodiol".

It is known that eucalyptus oils include certain components, such as cineoles, which are known to have antiseptic properties. For the avoidance of doubt, we make no claim to the antiseptic activity of any component, other than PMD when it is derived from a natural source.

A composition for use in accordance with the invention can comprise PMD and a carrier. PMD is poorly soluble in water, so that it is preferred to use an oil as a carrier, or use a solvent, such as alcohol, for water-based compositions.

It is known that PMD exists in two geometric isomeric forms, namely the cis and trans isomers, and that there are two enantiomers for each geometric isomer.

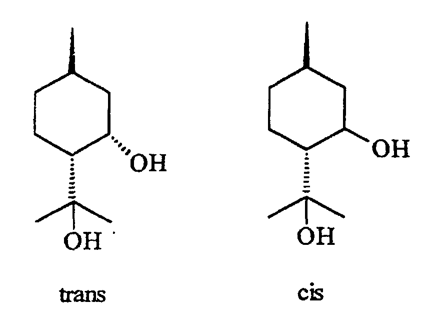

Our experimental work is based on a substantially pure racemic optical mixture of the cis isomer. It is, however, understood that the claimed activities for PMD are common to all its isomeric forms.

In a further aspect of the invention, the composition for use in the invention comprises only one of the isomers of PMD, with a carrier therefor.

It is a further aspect of the invention that the relative amounts of cis:trans PMD isomers in the compositions for use in the present invention are varied as desired. This can be done by mixing previously separated isomers in the appropriate ratio, or by adjusting the ratio in a mixture of naturally occurring or synthetic source.

In tests we have found that PMD is effective against certain strains of MRSA. In a further aspect, therefore, the invention provides the use of PMD against MRSA.

The uses of the present invention may be adopted in sanitizing a surface, for example in a hospital room or ward. In such cases PMD is applied to the surfaces. The PMD is preferably either in solution or as an emulsion in suitable liquid carriers. Most desirably, the PMD is formulated for spray application. For example, the PMD or Citriodiol can be dissolved in a suitable solvent or solvent mixture. In a particularly preferred mode of application, the spray is an electrostatic spray. For electrostatic spraying, the solvent or solvent system will need to be appropriate for electrostatic spraying, as will be clear to those skilled in the art. I prefer to use a mixture of conductive and nonconductive solvents to achieve a sprayable solution with the appropriate electrical resistivity for the spray nozzle in question, but suitable single solvents can of course be used. Charged particles of the composition including PMD are projected as a fine mist and because all the particles carry a similar, for example positive, charge they repel each other, but are attracted to an oppositely charged surface. By this means of spraying, a very good coverage of the composition on the surface may be obtained. Devices for electrostatically spraying the composition for use in the invention will be known to the person skilled in the art.

A spray may also be used, for example, for dispensing a composition including PMD onto a hand (or other part) of a person. The actuation of the dispenser may be by means of an infra-red sensor, for example, so that the person need not contact a surface, and thereby risk the transfer of microbes to or from their hand. Electrostatic spray application to a hand may be used, with advantage, where a substantially uniform coverage of antiseptic is particularly important e.g. to a surgeon during "scrubbing up" before surgery. To increase the likelihood of the charged particles covering the skin surface, desirably the electrostatic spray nozzles may be arranged to spray into the interior of a cabinet or container as the hand is introduced therein.

The liquids for applying to a surface, by spraying or otherwise, in accordance with the invention may contain, apart from the solvent(s) and/or other liquid carriers), other components as necessary or desirable for the intended purpose. Thus, second or further antiseptics may be included, as may surfactants, fragrances etc. In general, the compositions may be identical to known compositions for the purpose except that they contain PMD in addition to, or in whole or part substitution for one or more of, the other ingredients. The amount of PMD can vary widely, the greater the amount the greater the effect. We prefer to use up to about 5% by weight of the composition, in general.

PMD may also be included as a component in household detergents, cleansers and creams, for example, washing powders or conditioners and hand gels.

Again, the PMD may be included in what are otherwise standard or known compositions for the purpose concerned. The PMD may be an extra ingredient or in partial or complete replacement of a standard ingredient The compositions may already contain an antiseptic and the PMD is added to give an extra antiseptic effect.

Furthermore, PMD may be impregnated into household objects which may be prone to microbial infestation and so risk infecting inhabitants, e.g. dishcloths, plastic soap dishes, surfaces used for the preparation of food. For these purposes, the PMD may be included during manufacture of the object, e.g. in mixtures for plastics mouldings or the like, or it may be applied to the object after manufacture, e.g. by soaking dishcloths in PMD. The presence of the PMD at the surface of the object will provide the desired antiseptic effect. This is particularly useful for work surfaces, although of course such surfaces can also be regularly treated with PMD as by spraying or otherwise.

A composition including PMD can also be used in medicine. For example, it can be applied to broken skin, or to internal mucous membranes. It may be an ingredient in throat lozenges or pastilles or other products for ingestion. In this aspect, the invention provides PMD for use as an antiseptic, antibiotic, bactericide or fungicide. In medical uses the PMD may be formulated with the carrier as a cream, or, as mentioned above, as a throat lozenge or pastille. One cause of dandruff is known to be of fungal origin. PMD may be included as an ingredient in an anti-dandruff shampoo in order to combat the scalp infection, and indeed in non-medicated shampoos and the like. A further specific medical use is based upon the fact that many carriers of staphylococcus bacteria carry the bacterium in their nasal passages. A composition including PMD may be applied to the accessible inner surfaces of the nose in order to control or eliminate bacteria which may cause regular systemic effects. Another specific medical use is in wound irrigation during surgery, e.g. surgery conducted on the peritoneal cavity.

As will be evident to those skilled in the art, there are a very large number of medical uses of PMD not only as an antiseptic but also as an antibiotic, fungicide and bactericide. In general, new formulations for these purposes are not required: it is adequate and satisfactory to take a known or standard composition and include the PMD therein. Alternatively, one or more ingredients may be replaced by the PMD as appropriate. Those skilled in the art will well know the make-up of the various compositions and no further particular description thereof is given here.

PMD is the active ingredient in our "Mosiguard" ™ insect repellant. We have conducted tests to show regulatory authorities that PMD is not toxic, and we have marketed our insect repellent for several years and there has been no report of any significant toxicity thereof. Potentially, therefore, the medical uses of PMD may be topical or systemic. Systemic administration may be by way of an oral dosage form or by a parenteral route, such as by intra-venous injection.

In a further aspect, the invention provides the use of PMD in the manufacture of an antiseptic, antibiotic or fungicidal medicament.

In general, PMD is used in accordance with the invention in a wide variety of vehicles, depending on the particular use intended. The vehicles may, for example, include solids, liquids, emulsions, foams and gels. Typical vehicles include aqueous or alcoholic solutions, oils, fats, fatty acid esters, long chain alcohols and silicone oils, finely divided solids such as starch or talc, cellulosic materials and aerosol propellants. Topical compositions include perfumes, powders and other toiletries, lotions, liniments, oils and ointments, for example. Toiletries generally include after shave lotions, shaving soaps, lipstick, creams, foams, toilet water, deodorants, antiperspirants, solid colognes, toilet soaps, bath oils and salts, shampoos, face and hand creams, cleansing tissues, mouthwashes, eye drops, for example. Medicaments and allied compositions include, for example, ointments, lotions, decongestants and throat lozenges.

The amount of PMD present in the compositions will be selected to give the desired effect but we believe that generally from 0.5 to 5% by weight will be satisfactory. Greater or lesser amounts can be used.

A PMD-rich extract may be obtained from PMD-containing material, such as the leaves of a eucalyptus plant. A preferred source of PMD-rich extract is obtained by stirring eucalyptus citriadora oil derived from the plant with dilute sulphuric acid (usually 5% sulphuric acid), as previously explained in our GB-A-2282534.

In order that the invention may be fully understood, the following Example is given by way of illustration only.

### Example 1

### Cis PMD MIC/MBC Determination

**MIC** - minimum inhibitory concentration. This is the concentration of PMD which prevents bacterial growth. A "+" indicates bacterial growth, whereas a "-" indicates that bacterial growth is prevented. Thus, for E. Coli below, the minimum inhibitory concentration is 0.25% PMD in 1.25% ethanol.

**MBC** - minimum bactericidal concentration. This is the concentration of PMD which kills the bacteria. A " 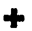 " indicates live bacteria are present. Therefore, for E. Coli, the minimum bactericidal concentration is 0.5% PMD in 2.5% ethanol i.e. the concentration immediately above that which does not kill the bacteria.

Cis PMD was dissolved in Absolute Ethanol (0.2 g/ml) to give 20% solution. This was further diluted in water to give 10% in 50% EtOH. 200 µl was added to 0.8 ml Iso-sensitest broth to give a 2% solution in 10% EtOH. Serial 2-fold dilutions in ISB were then carried out and 20 µl E.coli (McFarlane 0.5) were added to each tube and incubated overnight at 37°C. After 18 hours, tubes showing no growth were sub-cultured.

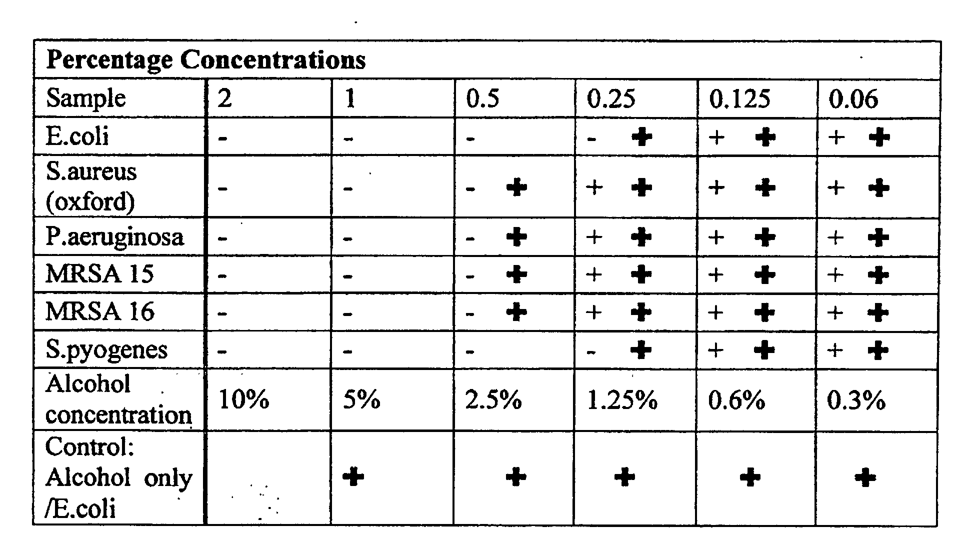

### Example 2

A composition of the invention for application to sanitise a surface was made up: by dissolving Citriodiol in a mixture of cyclohexanane (40%) and Exxol D (59%). The composition was applied by electrostatic deposition and by non-electrostatic spraying, to provide a thin antiseptic covering on various surfaces (human skin and work surfaces). The amounts of Citriodiol were varied to provide from about 0.5% to 5.00% PMD. Good antiseptic properties were obtained.

### Example 3

A composition of the invention for application to sanitise a surface was made by dissolving Citriodiol in a mixture of:

| | |
|---|---|
| * Downal PnB (20%) | 667 ml |
| ** Isopar L (44%) | 1473 ml |
| Stalox 60 (6%) | 194 ml |

| | |
|---|---|
| *Dowanol is a glycol ether/ether acetate solvent. | |
| ** Isopar is an isoparaffinic solvent. | |

The amount of Citriodiol was initially 1000 ml of 30% Citriodiol but other amounts can also be used.

The solution was sprayed electrostatically and non-electrostatically onto various surfaces, e.g. the hands, planar work surfaces, etc. with very satisfactory results.

### Example 4

A simple hair shampoo of sodium lauryl ether sulphate (10%) dispersed in water (90%) was mixed with 2% PMD to provide antiseptic properties in the shampoo. Other shampoos, including medicated shampoos for dandruff treatment, can also have PMD incorporated therein to provide an antiseptic, or enhanced antiseptic, effect.

### Example 5

Standard proprietary toilet soap formulations can be modified by the inclusion of from 1/2 to 5% PMD therein to provide an antiseptic or enhanced antiseptic effect. In general, it is not necessary to use more than 5% PMD but greater amounts can be used if desired.

### Example 6

A dermatological cream base of composition

| | % |
|---|---|
| sodium citrate | 1 |
| cetyl alcohol | 2 |
| stearyl alcohol | 3 |
| glycerine | 12 |
| sodium lauryl sulphate | 5 |
| parabens | 0.3 |
| petrolatum album to | 100% |

can be modified in accordance with the invention by including up to about 5% PMD therein to provide antiseptic properties therein.

### Example 7

Aqueous nose drops made from a basic aqueous nose drop composition, e.g.

| | |
|---|---|
| sodium hyaluronate | 0.01g |
| sodium cromoglycate | 1.0g |
| sterile purified water to | 100 ml |
| acid to pH 5.0 | |

can be modified in accordance with the invention to include PMD therein, e.g. 0.5% - 1%, to impart a further antiseptic effect.

### Example 8

Standard antiseptic solutions can have their effect enhanced by including therein PMD, in accordance with the invention. The PMD may be added to the standard solutions, or it may be used as a replacement for another antiseptic therein. Antiseptic solutions are generally fairly complex mixtures of antimicrobials, surfactants and solvents, but PMD can be formulated relatively simply in a suitable solvent to provide antiseptic properties.

### Example 9

Sterile antiseptic solutions for use internally on the human body, for example in wound sites during surgery, can be made using PMD in place of or in addition to other antiseptics. Such solutions are very effective for wound treatment or ensure antisepsis.

### Example 10

Sterile surgical scrubs can be made including PMD as the, or one of the, antiseptics. For example, PMD may be included in a known scrub such as Hibitane which comprises a detergent base of polyoxyethylene-polyoxypropylene block polymer (a nonionic surfactant) and dimethyllauryl amine oxide (an amphoteric surfactant), and chlorhexidine digluconate as the antiseptic. In general, PMD can be used with, or in place of, known antiseptics such as chlorhexidine and others, as will be clear to those skilled in the art.

## Claims

1. A compound of the formula: 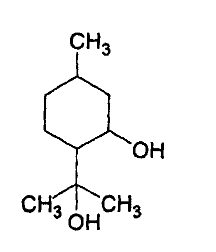 for use as a medicament.

2. A compound for use as a medicament according to claim 1, for use as an antiseptic, antibiotic, fungicide or bactericide.

3. A compound for use as a medicament according to claim 1, for use as an antiseptic against strains of *Staphylococcus aureus.*

4. A compound for use as a medicament according to claim 1, 2 or 3, which is a crude or purified natural product, or which is a synthetic product.

5. A compound for use as a medicament to claim 4, which is in the form of a PMD-rich extract from lemon eucalyptus.

6. A compound for use as a medicament according to any preceding claim, which is in the form of a mixture of the *cis-* and *trans-* isomers thereof.

7. A pharmaceutical composition comprising the compound according to any preceding claim in combination with a carrier.

8. A pharmaceutical composition according to claim 7, wherein the carrier is an oil or an organic solvent.

9. A pharmaceutical composition according to claim 7, wherein the carrier is a mixture of water and an organic solvent miscible therewith.

10. A pharmaceutical composition according to claim 7, 8 or 9, in the form of a throat lozenge or pastel, a shampoo, a skin spray, a nasal spray, or in a form suitable for wound irrigation.

11. A pharmaceutical composition according to any one of claims 7 to 10, wherein the compound is present in the composition in an amount greater than 0.5 wt%.

12. A pharmaceutical composition according to any one of claims 7 to 10, wherein the compound is present in the composition in an amount from 0.5 wn/o to 5 wt%.

13. A method of sanitising a surface comprising applying PMD thereto, wherein the surface is not a surface of a human or animal body.

14. A method according to claim 13, wherein the PMD is provided as part of a composition including PMD and a carrier.

15. A method according to claim 14, wherein the amount of PMD in the composition is greater than 0.5 wt%.

16. A method according to claim 14, wherein the amount of PMD in the composition is from 0.5 wt% to 5 wt%.

17. A method according to claim 13, 14, 15 or 16, wherein the surface is on the wall, floor, ceiling or other structural part of a room or building; or an equipment or apparatus; or is a work surface.

18. A method according to any one of claims 13 to 17, wherein the PMD or PMD composition is applied by spraying.

19. A method according to any one of claims 13 to 17, wherein the PMD or PMD composition is applied by electrostatic deposition.

20. A method according to claim 13, 14, 15 or 16, wherein the surface is a surface of a glove.

21. An article, which comprises a fabric impregnated with PMD or a plastics article impregnated with PMD.

22. The use of PMD in a household product such as a detergent, cleanser or cream, to provide antiseptic properties.

23. The use according to claim 22, wherein the amount of PMD in the product is greater than 0.5 wt%.

24. The use according to claim 22, wherein the amount of PMD in the product is from 0.5 wt% to 5 wt%.

25. The use of PMD as an antiseptic, antibacterial, fungicide or bactericide, excluding the use of PMD in any method of treatment of the human or animal body by surgery or therapy or diagnostic methods practised on the human or animal body.

26. The use of PMD as an antiseptic in a sterile surgical scrub solution.

27. The use according to claim 26, wherein the amount of PMD in the solution is greater than 0.5 wt%.

28. The use according to claim 26, wherein the amount of PMD in the solution is from 0.5 wt% to 5 wt%.

29. The use of PMD in the manufacture of a medicament for use as an antiseptic, antibiotic, fungicide or bactericide.

30. The use according to claim 29, wherein the amount of PMD in the medicament is greater than 0.5 wt%.

31. The use according to claim 29, wherein the amount of PMD in the medicament is from 0.5 wt% to 5 wt%.

32. The use according to any one of claims 22 to 31, wherein the PMD is a crude or purified natural product, or is a synthetic product.

## Patentansprüche

1. Verbindung der Formel: 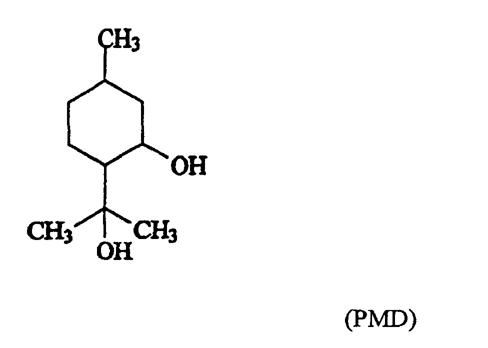 für die Verwendung als Medikament.

2. Verbindung für die Verwendung als Medikament nach Anspruch 1 für die Verwendung als antiseptisches Mittel, Antibiotikum, Fungizid oder Bakterizid.

3. Verbindung für die Verwendung als Medikament nach Anspruch 1, für die Verwendung als antiseptisches Mittel gegen Stämme von *Staphylococcus aureus.*

4. Verbindung für die Verwendung als Medikament nach Anspruch 1, 2 oder 3, bei der es sich um ein rohes oder gereinigtes natürliches Produkt oder ein synthetisches Produkt handelt.

5. Verbindung für die Verwendung als Medikament nach Anspruch 4, die in Form eines PMD-reichen Extrakts aus Zitronen-Eukalyptus vorliegt.

6. Verbindung für die Verwendung als Medikament nach einem der vorhergehenden Ansprüche, die in Form einer Mischung der *cis-* und *trans*-Isomere derselben vorliegt.

7. Pharmazeutische Zusammensetzung, die die Verbindung nach einem der vorhergehenden Ansprüche in Kombination mit einem Träger umfasst.

8. Pharmazeutische Zusammensetzung nach Anspruch 7, wobei es sich bei dem Träger um ein Öl oder ein organisches Lösungsmittel handelt.

9. Pharmazeutische Zusammensetzung nach Anspruch 7, wobei der Träger aus einer Mischung von Wasser und einem organischen damit mischbaren Lösungsmittel besteht.

10. Pharmazeutische Zusammensetzung nach Anspruch 7, 8 oder 9 in Form einer Halstablette oder -pastille, eines Shampoons, eines Hautsprays, eines Nasensprays oder in einer für die Wundenspülung geeigneten Form.

11. Pharmazeutische Zusammensetzung nach einem der Ansprüche 7 bis 10, wobei die Verbindung in der Zusammensetzung in einer Menge von mehr als 0,5 Gew.-% vorliegt.

12. Pharmazeutische Zusammensetzung nach einem der Ansprüche 7 bis 10, wobei die Verbindung in der Zusammensetzung in einer Menge von 0,5 Gew.-% bis 5 Gew.-% vorliegt.

13. Methode für das Hygienischmachen einer Oberfläche, die das Auftragen von PMD darauf umfasst, wobei die Oberfläche keine Oberfläche eines menschlichen oder tierischen Körpers ist.

14. Methode nach Anspruch 13, wobei das PMD als Teil einer Zusammensetzung bereitgestellt wird, die PMD und einen Träger enthält.

15. Methode nach Anspruch 14, wobei die Menge von PMD in der Zusammensetzung mehr als 0,5 Gew.-% beträgt.

16. Methode nach Anspruch 14, wobei die Menge von PMD in der Zusammensetzung 0,5 Gew.-% bis 5 Gew.-% beträgt.

17. Methode nach Anspruch 13, 14, 15 oder 16, wobei die Oberfläche sich an der Wand, auf dem Boden, an der Decke oder einem anderen strukturellen Teil eines Raums oder Gebäudes oder an einem Gerät oder Apparat befindet, oder eine Arbeitsfläche darstellt.

18. Methode nach einem der Ansprüche 13 bis 17, wobei das PMD oder die PMD-Zusammensetzung durch Aufsprühen aufgebracht wird.

19. Methode nach einem der Ansprüche 13 bis 17, wobei das PMD oder die PMD-Zusammensetzung durch elektrostatisches Abscheiden aufgebracht wird.

20. Methode nach Anspruch 13, 14, 15 oder 16, wobei es sich bei der Oberfläche um eine Oberfläche eines Handschuhs handelt.

21. Artikel, der einen mit PMD imprägnierten Stoff oder einen mit PMD imprägnierten Kunststoffartikel umfasst.

22. Verwendung von PMD in einem Haushaltprodukt wie einem Waschmittel, Reinigungsmittel oder einer Creme zur Bereitstellung von antiseptischen Eigenschaften.

23. Verwendung nach Anspruch 22, wobei die Menge von PMD in dem Produkt mehr als 0,5 Gew.-% beträgt.

24. Verwendung nach Anspruch 22, wobei die Menge von PMD in dem Produkt 0,5 Gew.-% bis 5 Gew.-% beträgt.

25. Verwendung von PMD als antiseptisches Mittel, Antibakterium, Fungizid oder Bakterizid, unter Ausschluss der Verwendung von PMD bei jeglicher Methode für die Behandlung des menschlichen oder tierischen Körpers durch Chirurgie oder Therapie oder diagnostische Methoden, die am menschlichen oder tierischen Körper durchgeführt werden.

26. Verwendung von PMD als antiseptisches Mittel in einer sterilen Desinfizierlösung für chirurgische Zwecke.

27. Verwendung nach Anspruch 26, wobei die Menge von PMD in der Lösung mehr als 0,5 Gew.-% beträgt.

28. Verwendung nach Anspruch 26, wobei die Menge von PMD in der Lösung 0,5 Gew.-% bis 5 Gew.-% beträgt.

29. Verwendung von PMD bei der Herstellung eines Medikaments für die Verwendung als antiseptisches Mittel, Antibiotikum, Fungizid oder Bakterizid.

30. Verwendung nach Anspruch 29, wobei die Menge von PMD in dem Medikament mehr als 0,5 Gew.-% beträgt.

31. Verwendung nach Anspruch 29, wobei die Menge von PMD in dem Medikament 0,5 Gew.-% bis 5 Gew.-% beträgt.

32. Verwendung nach einem der Ansprüche 22 bis 31, wobei es sich bei dem PMD um ein rohes oder gereinigtes natürliches Produkt oder ein synthetisches Produkt handelt.

## Revendications

1. Composé de la formule: 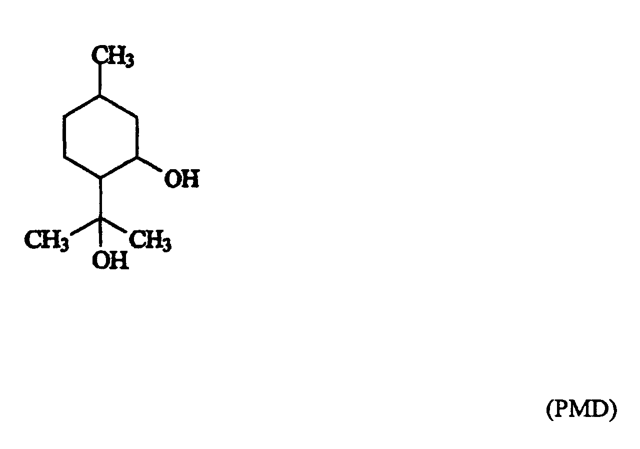 pour utilisation comme médicament.

2. Composé pour utilisation en tant que médicament selon la revendication 1, pour utilisation comme antiseptique, antibiotique, fongicide ou bactéricide.

3. Composé pour utilisation en tant que médicament selon la revendication 1, pour utilisation comme antiseptique contre les souches de staphylocoque doré.

4. Composé pour utilisation en tant que médicament selon la revendication 1, 2 ou 3, qui est un produit naturel brut ou purifié ou encore un produit synthétique.

5. Composé pour utilisation en tant que médicament selon la revendication 4, qui se présente sous forme d'extrait riche en PMD à partir d'eculyptus au citron.

6. Composé pour utilisation en tant que médicament selon l'une quelconque des revendications précédentes, qui se présente sous forme de mélange de *cis-* et de *trans*-isomères du produit ci-dessus.

7. Composition pharmaceutique comprenant le composé selon l'une quelconque des revendications précédentes en combinaison avec un porteur.

8. Composition pharmaceutique selon la revendication 7, où le porteur est une huile ou bien un solvant organique.

9. Composition pharmaceutique selon la revendication 7, où le porteur est un mélange d'eau et d'un solvant organique miscible avec cette dernière.

10. Composition pharmaceutique selon la revendication 7, 8 ou 9, sous forme de dragée ou de pastille pour la gorge, de shampooing, de pulvérisateur pour la peau, de pulvérisateur nasal ou sous une forme appropriée à l'irrigation des blessures.

11. Composition pharmaceutique selon l'une quelconque des revendications 7 à 10, où le composé est présent dans la composition dans une quantité supérieure à 0,5 % en poids.

12. Composition pharmaceutique selon l'une quelconque des revendications 7 à 10, où le composé est présent dans la composition dans une quantité comprise entre 0,5 et 5 % en poids.

13. Méthode de désinfection d'une surface comprenant une application de PMD, où la surface n'est pas d'origine humaine ou animale.

14. Méthode selon la revendication 11, où le PMD est présent dans le cadre d'une composition incluant le PMD et un porteur.

15. Méthode selon la revendication 14, où la quantité de PMD dans la composition est supérieure à 0,5 % en poids.

16. Méthode selon la revendication 14, où la quantité de PMD dans la composition est comprise entre 0,5 et 5 % en poids.

17. Méthode selon la revendication 13, 14, 15 ou 16, où la surface est située au mur, au sol, au plafond ou toute autre partie structurelle d'une pièce ou d'un bâtiment ; ou bien d'un équipement ou appareil ; ou bien constituant une surface de travail.

18. Méthode selon l'une quelconque des revendications 13 à 17, où le PMD ou bien la composition de PMD est appliqué par pulvérisation.

19. Méthode selon l'une quelconque des revendications 13 à 17, où le PMD ou bien la composition de PMD est appliqué par dépôt électrostatique.

20. Méthode selon la revendication 13, 14, 15 ou 16, où la surface est une surface de gant.

21. Article comprenant un tissu imprégné de PMD ou article plastique imprégné de PMD.

22. Utilisation de PMD dans un produit d'entretien, par exemple un détergent, un produit de rinçage ou une crème, pour fournir des propriétés antiseptiques.

23. Utilisation selon la revendication 22, où la quantité de PMD dans le produit est supérieure à 0,5 % en poids.

24. Utilisation selon la revendication 22, où la quantité de PMD dans le produit est comprise entre 0,5 et 5 % en poids.

25. Utilisation de PMD comme antiseptique, antibactérien, fongicide ou bactéricide, excluant l'utilisation de PMD dans toute méthode de traitement du corps humain ou animal par chirurgie ou thérapie ou méthodes de diagnostic pratiquées sur le corps humain ou animal.

26. Utilisation de PMD comme antiseptique dans une solution de nettoyage chirurgicale stérile.

27. Utilisation selon la revendication 26, où la quantité de PMD dans la solution est supérieure à 0,5 % en poids.

28. Utilisation selon la revendication 26, où la quantité de PMD dans la solution est comprise entre 0,5 et 5 % en poids.

29. Utilisation de PMD dans la fabrication d'un médicament pour utilisation comme antiseptique, antibiotique, fongicide ou bactéricide.

30. Utilisation selon la revendication 29, où la quantité de PMD dans le médicament est supérieure à 0,5 % en poids.

31. Utilisation selon la revendication 29, où la quantité de PMD dans le médicament est comprise entre 0,5 et 5 % en poids.

32. Utilisation selon l'une quelconque des revendications 22 à 31, où le PMD est un produit naturel brut ou purifié ou encore un produit synthétique.
